# EUROPEAN PATENT APPLICATION

(11) **EP 2 769 900 A1**
(43) Date of publication of application: **27.08.2014**
(21) Application number: 14155156.4
(22) Date of filing: 14.02.2014
(51) Int. Cl.: B62D 1/10

(54) **A vehicle steering system**

(30) Priority: 20.02.2013 IT RE20130008
(71) Applicant: Lovol Europe Engineering S.R.L., 40012 Calderara di Reno, Bologna (IT)
(72) Inventor: Roccatello, Umberto, 25015 Desenzano del Garda, Brescia (IT); Romeo, Stefano, 41100 Modena (IT)
(74) Representative: Corradini, Corrado

(57) **Abstract**

A vehicle steering system (10) which comprises a steering column (30) able to control a steering of a vehicle following a rotation imposed by a steering wheel (60) and at least a control panel (50) of functions of the vehicle located on the steering wheel (60), in which the steering wheel (60) is associated in rotation with respect to the control panel (50).

## Description

### TECHNICAL FIELD

The present invention relates to a steering system for vehicles, in particular a steering system provided with a steering wheel and a control panel arranged on the steering wheel.

### PRIOR ART

As is known, vehicle steering systems generally comprise a steering wheel able to activate a steering column in rotation, which steering column, in turn, following the rotation imposed on the steering wheel, is destined to cause a turning of the wheels of the vehicle.

Generally, in particular in heavy vehicles, such as agricultural tractors, a hydraulic drive or orbitrol device is used, i.e. a type of steering servo which facilitates the steering of the vehicle in order to make the steering manoeuvre "softer".

In practice, an orbitrol is a hydraulic pump (which functions with oil) requiring no mechanical connection between the steering wheel and the steering axle and is connected to the base of the steering column activated by the steering wheel. Further, the vehicle comprises a control panel which in the majority of cases is arranged in the dashboard which supports the steering wheel and is located posteriorly of the steering wheel in a fixed position.

Especially in the above-mentioned heavy vehicles, it is found that due to loss, oil leakage and so on, which the orbitrol is inevitably prey to, the position of the steering wheel spokes is never definite and fixed with respect to the reference position it should have according to design specifications.

In practice, it is observed that if in a first step, with the wheels of the vehicle straight, the spokes of the steering wheel are in a first reference position, following the use of the steering system when the straight-wheeled position is reestablished, the spokes of the steering wheel are orientated differently with respect to the first reference position, by an amount that is not predictable and variable according to the fluid-dynamic losses of the orbitrol.

In this situation, therefore, it is observed that the spokes of the steering wheel, precisely because of the uncertainty and unpredictability of the position thereof, do not enable an easy view of the control panel, for example provided with viewing instruments of the functioning state of the vehicle and/or an instrument control panel when the control panel is positioned behind the steering wheel.

In an attempt to obviate the above drawbacks, steering wheels are known with the control panel fixed on the front portion thereof; this arrangement considerably increasing the visibility of the control panel.

This solution is particularly suitable in competitive vehicles, in which the reduction ratio of the steering is particularly small and the steering wheel is not able to perform complete rotations or particularly large rotation angles.

It has been in fact observed that in traditional vehicles, such as motor cars and, even more, heavy vehicles, these steering wheels provided with a control panel do not improve the visibility of the control panel at all, as it rotates solidly with the steering wheel and is also sometimes in an upturned position or, in any case, during use varies the position thereof irregularly, as described above, because of leakage and loss of fluids relating to the orbitrol.

An aim of the present invention is to obviate the above-mentioned drawbacks of the prior art, with a solution that is simple, rational and relatively inexpensive. These aims are attained by the characteristics of the invention as reported in the independent claim. The dependent claims delineate preferred and/or particularly advantageous aspects of the invention.

### DESCRIPTION OF THE INVENTION

In particular, the invention discloses a steering system for vehicles which comprises a steering columns able to command steering of a vehicle following a rotation imposed by a steering wheel and at least a control panel of the functions of the vehicle located on the steering wheel; in the invention, the steering wheel is associated in rotation with the control panel.

In practice, the control panel is associated to the steering wheel in such a way that no structural element of the steering wheel is superposed on the support panel, i.e. is interposed between the control panel and the vehicle driver.

With this solution, the control panel is located in front of the steering wheel and is therefore better visible with respect to the control panel of the traditional type, i.e. a control panel set in the dashboard posteriorly of the steering wheel.

Further, with this solution, the steering wheel can rotate with respect to the control panel, which remains fixed with respect to the dashboard/cabin of the vehicle and thus considerably improves visibility thereof and use thereof even during steering operations.

Furthermore, in an aspect of the invention the steering column is rotatably inserted in a tubular casing to which the control panel is solidly constrained.

With this solution, the tubular casing, which is solid in rotation (at least with respect to the longitudinal axis thereof) with the cabin/dashboard of the vehicle, directly supports the control panel in a fixed position, while the steering wheel is free to be activated in rotation such as to command the rotation of the wheels of the vehicle.

The steering system advantageously comprise transmission means of the rotary motion of the steering wheel to rotary motion of the steering column.

In this way the optimal transmission between the steering wheel and the steering column can be predefined according to requirements.

In particular, the transmission means comprise an internally-cogged crown wheel fixed to the steering wheel and able to enmesh with an externally-cogged crown wheel keyed on the steering column.

In this way, as the transmission ratio is necessarily less than 1, a multiplying transmission ratio between the steering wheel and the steering column can be defined, which enables using a smaller-cylinder orbitrol with respect to those normally used, given a same oil flow, with a consequent reduction in volumes in the vehicle and economical and plant saving.

In a further aspect of the invention the internally-cogged crown wheel and the externally-cogged crown wheel are rotatably associated to the tubular casing. The externally-cogged crown wheel and the internally-cogged crown wheel are advantageously eccentric.

In this way, the two cogged crown wheels, with fixed-rotation axis with respect to the tubular case and in which the externally-cogged crown wheel exhibits a smaller radius than the internally-cogged crown wheel, define a gap opposite the enmeshing zone able to place the zone underlying the crown wheels in communication with a zone located superiorly thereof.

The tubular casing preferably comprises a cable tray which can be interposed between the externally-cogged crown wheel and the internally-cogged crown wheel, for example inserted with play in the gap.

In this way the control panel can easily be cabled in hidden zones of the dashboard.

In a further aspect of the invention, the steering column comprises a first lower portion and a second upper portion, joined to one another by means of a universal joint.

Further, the tubular casing comprises a first lower tract and a second upper tract hinged to one another, the first lower tract being rotatably inserted internally of the first lower tract and the second upper tract being rotatably inserted internally of the second upper portion.

In this way the steering system can be made orientable internally of the vehicle, such as to be able to adapt the height or the needs of the driver.

Additionally or alternatively to the above-described aims, the steering column, i.e. at least one from the first lower portion and the second upper portion, is telescopic.

### BRIEF DESCRIPTION OF THE DRAWINGS

Further characteristics and advantages of the invention will emerge from a reading of the following description, provided by way of non-limiting example, with the aid of the figures illustrated in the accompanying tables of drawings.

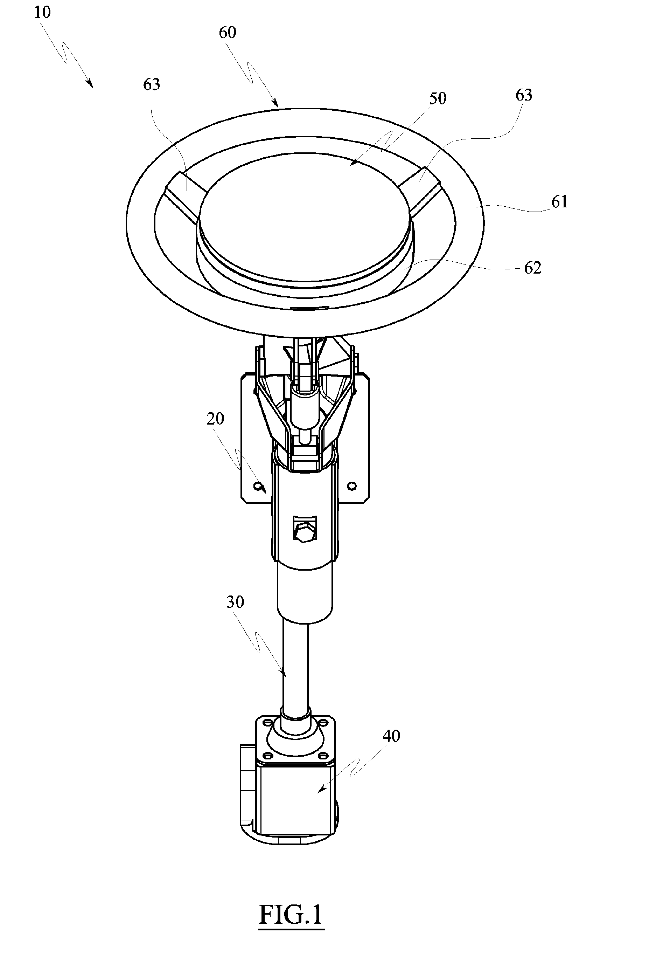

Figure 1 is an axonometric frontal view of a steering system according to the invention.

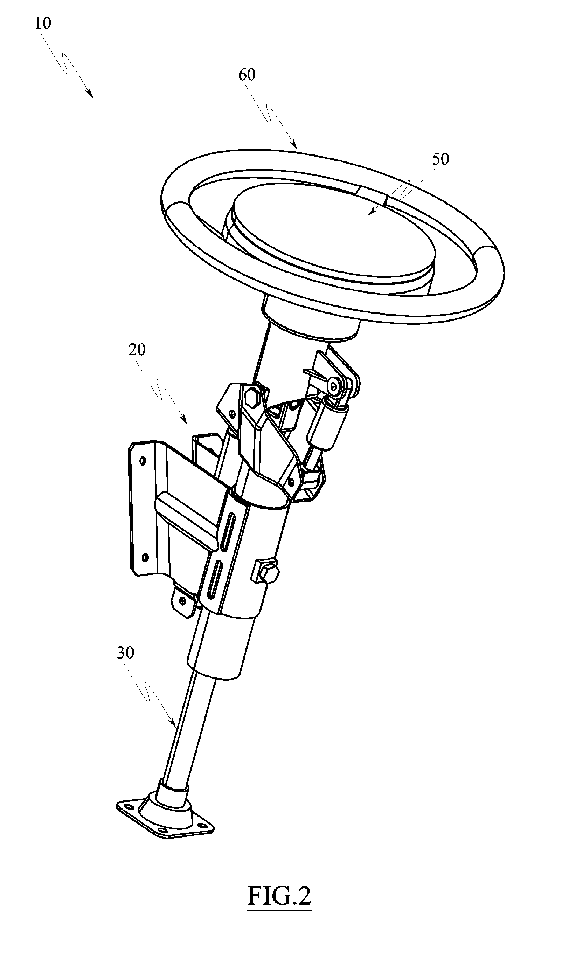

Figure 2 is an axonometric view from the left of the steering system of figure 1.

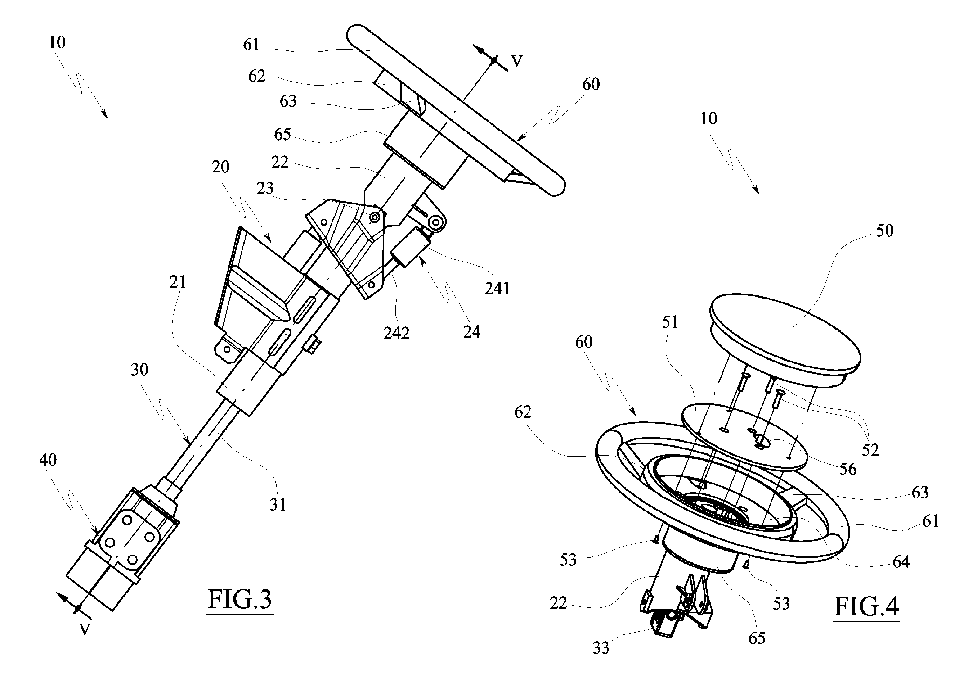

Figure 3 is a lateral view of the steering system of figure 1.
Figure 4 is a partially-exploded view of a detail of figure 1.

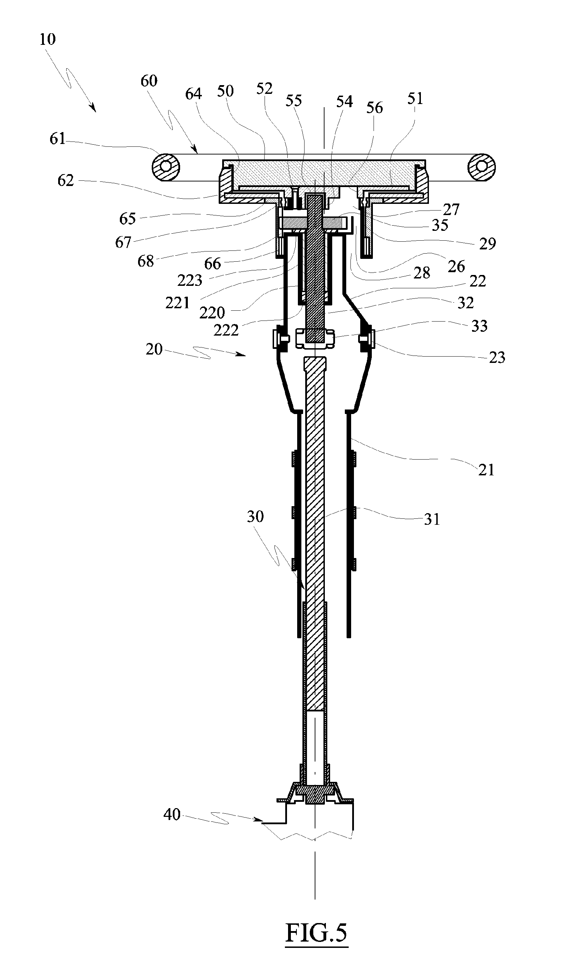

Figure 5 is a longitudinal section view of the steering system along section line V-V of figure 3.

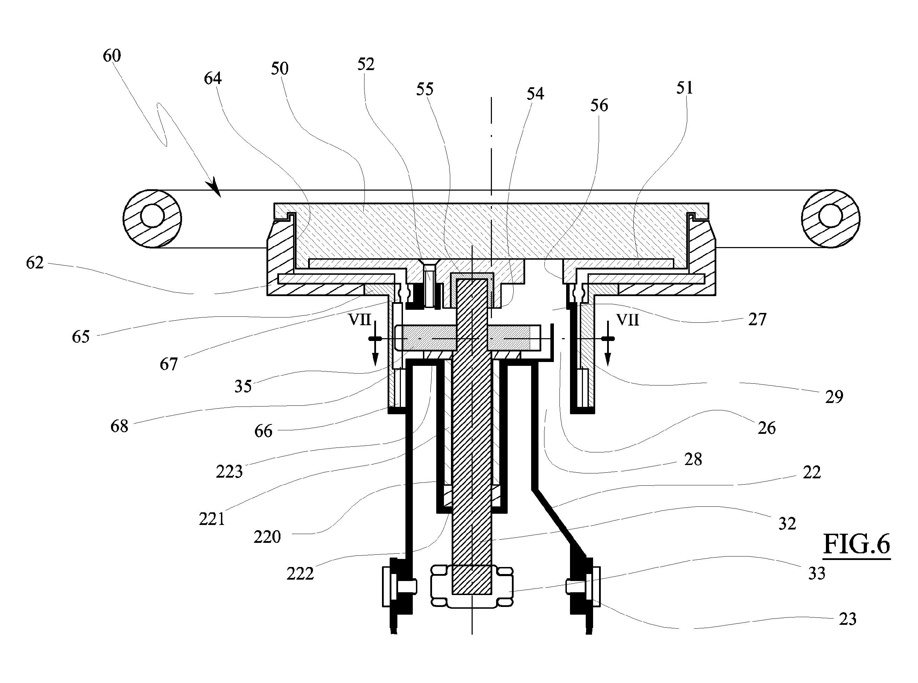

Figure 6 is a larger-scale view of a detail of figure 5.

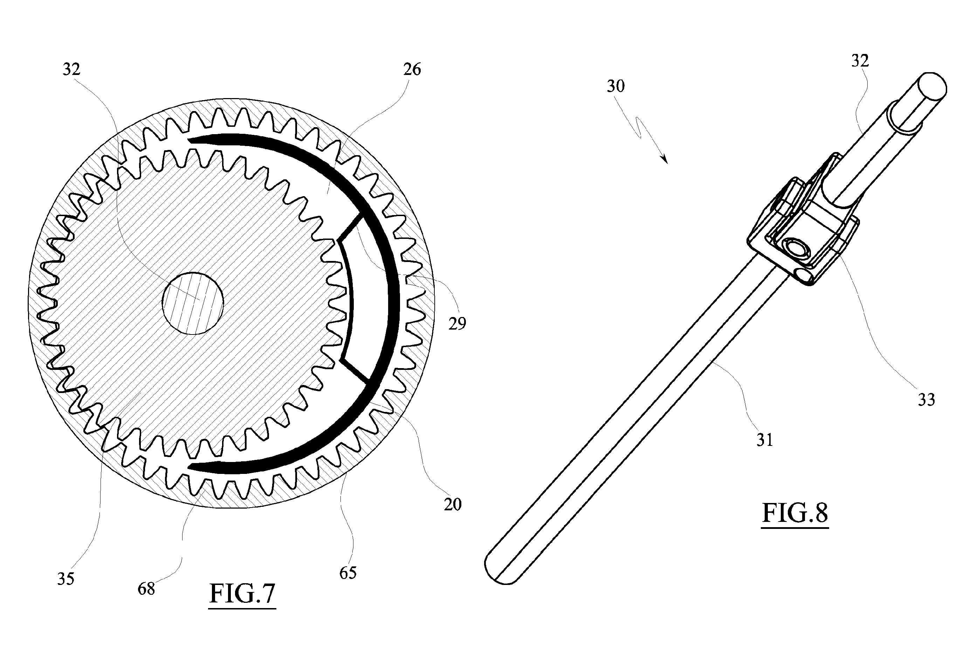

Figure 7 is the section view along the section line VII-VII of figure 6.
Figure 8 is an axonometric view of a steering column of a steering system according to the invention.

### BEST WAY OF CARRYING OUT THE INVENTION

With particular reference to the figures of the drawings, 10 denotes in its entirety a steering system for vehicles, in particular but not limited to a steering system for heavy vehicles, known as heavy duty vehicles, such as agricultural tractors, lorries, buses, commercial vehicles or self-propelling work vehicles or the like. The steering system 10 comprises an internally-hollow tubular casing 20, in which a steering column 30 is rotatably inserted, to the base of which a steering box is associated, for example an orbitrol 40.

The orbitrol 40 (or hydraulic drive) is a particular hydraulic pump (which functions with oil) requiring no mechanical connection between the steering wheel 60 and the steering axle (actuated by hydraulic cylinders).

The tubular casing 20 comprises a first lower tract 21 inserted in a special seating in the vehicle cabin, for example the dashboard, for example in such a way as to be solidly fixed thereto or coupled (as shown) thereto by means of sliding couplings so as to slide along the longitudinal axis in order to be height-regulated. The tubular casing 20 further comprises a second upper tract 22 constrained to the first lower tract 21, such as to axially prolong the first lower tract, and which is hinged to the first lower tract 21 in such a way as to rotate with respect to a horizontal-axis hinge pin 23.

Further, a jack 24 is interposed between the first lower tract 21 and the second upper tract 22, a cylinder 241 of which jack 24 is hinged with a horizontal rotation axis parallel to the axis of the hinge pin 23 to one from between the first lower tract 21 and the second upper tract 22 (in the example the upper second tract 22), and the piston 242 of which is hinged with a horizontal rotation axis parallel to the axis of the hinge pin 23 to the other of the second lower tract 22 and the first upper tract 21 (in the example the first upper tract 21).

The steering column 30, for example, comprises a first lower portion 31, able to be inserted in the first lower tract 21 of the tubular casing 20, and a second upper portion 32, able to be housed internally of the second upper tract 22 of the tubular casing 20.

The first lower portion 31 and the second upper portion 32 are associated to one another by means of a universal joint 33, which enables transmission of the rotating motion of the second upper portion 32 to the first lower portion 31 with respect to the respective longitudinal axes, enabling at the same time a rotation, with respect to a horizontal axis parallel to the axis of the hinge pin 23, of the second upper portion 32 with respect to the first lower portion 31.

In the illustrated example the first lower portion 31 is telescopic; in practice it comprises a lower sleeve in which an upper stem is slidably inserted, and together the upper stem and the lower sleeve define the first lower portion 31 of the steering column 30.

It is also possible, however, for the tubular casing 20 and/or the steering pinion to be realised singly, respectively, in a single piece or to be made up of several parts respectively solidly constrained to one another.

A control panel 50 of the vehicle functions is fixed in particular to the free upper end 22 of the tubular casing 20, which control panel 50 is for example provided with an instrument panel provided with usual measuring instruments, screens, button panels, regulating cursors or other monitoring devices and/or commands of the vehicle functions.

In practice, a fastening plate 51, for example circular, is fixed superiorly of the second upper tract 22, at the upper edge thereof, for example by means of fastening screws 52, such as to superiorly occlude the second upper tract.

The fastening plate 51, in turn, comprises centring holes which enable fixing the box body of the control panel 50, for example using further screws 53, to the upper face of the fastening plate 51 opposite the face that occludes the second upper tract 22.

The free end of the second upper portion 32 of the steering column 30 is inserted in a cylindrical seating 54 realised in the fastening plate 51, for example in an eccentric position with respect thereto, by interposing a self-lubricating bushing 55 which enables rotation, substantially without dragging, of the steering column 30 with respect to the fastening plate 51 and therefore with respect to the control panel 50.

The steering system 10 further comprises a steering wheel 60 which is able to command the rotation of the steering column 30, as will more fully emerge in the following.

In practice the steering wheel 60 comprises a toroidal body 61 which a user can grip, which is fixed to a concentric toroidal crown wheel 62 having a smaller diameter by means of one or more spokes 63 (in the example three in number, radial and equidistant).

The toroidal crown 62 defines a frontal seating 64, for example cylindrical and blind, which is able to substantially snugly house the control panel 50 (joined to the fastening plate 51), though with both axial and radial play.

In particular, for the aims of the present invention, the steering wheel 60 is rotatably coupled to the control panel 50, with respect to a substantially parallel (and coinciding) axis to the axis of the steering wheel.

The control panel 50 is therefore centred internally of the steering wheel 60 (internally of the front seating 64 thereof), for example located concentrically with respect to the toroidal body 61.

The toroidal body 61 of the steering wheel 60 externally surrounds the control panel 50, for example by partially having it fitted if the steering wheel 60 has an overall substantially concave shape, and is joined to the toroidal crown 62 by means of the spokes 63, which are located externally of and/or below the control panel 50 and never in front of it, so that the view thereof is always completely unobstructed.

In practice, the steering wheel 60 is substantially coupled to the second upper tract 22 of the tubular casing 20 with respect to an axis that is parallel to the axis of the second upper tract and is constrained thereto in translation.

A cylindrical bushing 65 is inferiorly fixed, for example by fastening screws, to the toroidal crown 62; the cylindrical bushing 65 can be inserted, with radial play, on the second upper tract 22 of the tubular body 20 and is supported thereby by means of suitable support shelves fashioned on the second upper tract 22.

In the illustrated example, the second upper tract 22 comprises two annular shelves, of which an upper shelf and a lower shelf, able to support a respective revolving organ which can be interposed between the bushing 65 and the second upper tract 22 such as to constrain the bushing 65 and the second upper tract 22 in rotation with respect to the axis of the second upper tract 22.

In practice, a roller bearing 66 is supported on the lower shelf and the internal ring of a ball bearing 67 is supported on the upper shelf, with the external ring thereof being fitted (for example by friction) internally of the bushing 65.

By means of the bushing 65, the steering wheel 60 is able to command rotation of the steering column 30, via transmission means of the rotary motion of the steering wheel 60, into rotary motion of the steering column 60 with respect to the longitudinal axis thereof.

In practice, the bushing 65 comprises an internal cylindrical portion exhibiting an internal cogging 68, a portion of which is able to enmesh with an externally-cogged gear wheel 35 splined on the steering column 30 and in particular on the second upper portion 32, in an intermediate zone thereof.

The externally-cogged gear wheel 35 exhibits a smaller radius with respect to the internal radius of the bushing 65 (and, correspondingly, a smaller number of cogs).

In practice, the transmission ratio between the bushing 65 and the externally-cogged gear wheel 35 is in gearing terms less than 1 and preferably at least 0.8. Further, as the bushing 65 is associated eccentrically to the externally-cogged gear wheel 35, a gap 26 is defined between the internal cogging 68 and the externally-cogged gear wheel 35, located on the opposite side of the portion of externally-cogged gear wheel 35 which enmeshes with the internal cogging 68.

In practice, the gap 26 sets an upper chamber 27 of the second upper tract 22, internally defined thereof and interposed axially between the externally-cogged gear wheel 35 and the fastening plate 51, in axial communication with a lower chamber 28.

The fastening plate 51, for example, comprises a through-hole 56, for example substantially aligned in plan with the gap 26, able to set the control panel 50 in communication with the upper chamber 35.

The second upper tract 22 comprises at least a cable tray 29 defined internally of the second upper tract 22, for example the walls of which branch directly from the internal walls of the second upper tract 22, and communicating with the outside of the second upper tract 22 by means of an opening afforded on the wall of the second upper tract.

The cable tray 29 can be inserted axially internally of the gap 26 and is able to place the upper chamber 27 in communication with the lower chamber 28 for the passage of electric supply cables, or telecommunication cables or other like cabling, which can connect the control panel 50 to the control panel of the vehicle or another command system of the control panel 50, as is known to the technical expert in the sector, and located on-board the vehicle.

The second upper tract 22 comprises an internal sleeve 220 which can be inserted coaxially on the intermediate portion of the second upper portion 32 of the steering column 30 - interposed axially between the externally-cogged wheel 35 and the universal joint 33 - by interposing a centring bushing 221 and/or a self-lubricating fifth wheel 222.

The internal sleeve 220, in particular, branches inferiorly from an internal annular shelf fixed to the internal wall of the second upper tract 22 and located inferiorly of the externally-cogged wheel 35.

A further self-lubricating fifth wheel 223 is interposed between the externally-cogged wheel 35 and the internal annular shelf.

In the light of the above, the functioning of the steering system 10 is as follows. To operate the steering of the wheels of the vehicle, it is sufficient to activate the steering wheel 60 in rotation with respect to the axis thereof, by gripping the toroidal body 61.

The rotation of the steering wheel 60 is such as to draw the bushing 65 in rotation, which by means of the internal cogging 68 draws the externally-cogged wheel 35 in rotation, and therefore also the steering column 30, with the desired gear ratio.

The steering column 30 will therefore activate the orbitrol 40 which will command the steering of the vehicle wheels, as known to an expert in the field.

When the steering wheel 60 is activated in rotation, it rotates about the control panel 50, which is fixed with respect to the vehicle dashboard and is located in a frontal position with respect to the steering wheel and is therefore perfectly visible and manipulable.

The steering wheel 60, with the control panel 50, is further orientable internally of the cabin of the vehicle by means of the hinge pin 23 and the universal joint 33 which enable the inclination (in contrast to the resistant force of the jack 24) with respect to a horizontal rotation axis and usually located parallel to the axle of the vehicle wheel.

The invention as it is conceived is susceptible to numerous modifications and variants, all falling within the scope of the inventive concept.

Further, all the details can be replaced by other technically-equivalent elements. In practice the materials used, as well as the contingent forms and dimensions, can be any according to requirements, without its forsaking the protective scope outlined in the following claims.

## Claims

1. A vehicle steering system (10) which comprises a steering column (30) able to control a steering of a vehicle following a rotation imposed by a steering wheel (60) associated to an end of the steering column (30), and at least a control panel (50) of functions of the vehicle located on the steering wheel (60), wherein the steering wheel (60) is associated in rotation with respect to the control panel (50), **characterized in that** it comprises an orbitrol (40) associated to the free end of the steering column (30).

2. The system (10) of claim 1, wherein the steering column (30) is rotatingly inserted internally of a tubular casing (20) to which the control panel (50) is fixed.

3. The system (10) of claim 1, **characterised in that** it comprises transmission means (68, 30) of the rotating motion of the steering wheel (60) into rotating motion of the steering column (20).

4. The system (10) of claim 1, **characterised in that** the transmission means comprise an internally-cogged crown wheel (68) fixed to the steering wheel (60) and able to enmesh with an externally-cogged crown wheel (35) keyed on the steering column (30).

5. The system (10) of claim 4, wherein the externally-cogged crown wheel (68) and the internally-cogged crown wheel (35) are eccentric.

6. The system (10) of claim 2 and 4, wherein the internally-cogged crown wheel (68) and the externally-cogged crown wheel (35) are rotatably associated to the tubular casing (20).

7. The system (10) of claims 2 and 4, wherein the tubular casing (20) comprises a cable tray (29) which can be interposed between the externally-cogged crown wheel (35) and the internally-cogged crown wheel (68).

8. The system (10) of claim 1, wherein the steering column (30) comprises a first lower portion (31) and a second upper portion (32) joined to one another by means of a universal joint (33).

9. The system (10) of claim 1, wherein at least one from between the first lower portion (31) and the second upper portion (32) is telescopic.

10. The system (10) of claim 2 and 8, wherein the tubular casing (20) comprises a first lower tract (21) and a second upper tract (22) hinged to one another, the first lower portion (31) being rotatably inserted internally of the first lower tract (21) and the second upper portion (32) being rotatably inserted internally of the second upper tract (22).
